# FASCICULE DE BREVET EUROPEEN

(11) **EP 2 713 827 B1**
(45) Date de publication et mention de la délivrance du brevet: **29.07.2015**
(21) Numéro de dépôt: 12731042.3
(22) Date de dépôt: 22.05.2012
(51) Int. Cl.: A47C 23/00, A47C 27/06

(54) **ELEMENT DE SUSPENSION DE COUSSIN OU DE MATELAS**
AUFHÄNGUNGSELEMENT FÜR EIN KISSEN ODER EINE MATRATZE
SUSPENSION ELEMENT OF A CUSHION OR MATTRESS

(30) Priorité: 24.05.2011 FR 1154523
(43) Date de publication de la demande: 09.04.2014
(73) Titulaire: Tournadre SA Standard Gum, 18000 Bourges (FR)
(72) Inventeur: LOBRY, Jacques, F-18000 Bourges (FR); LOBRY, Pascal, F-18000 Bourges (FR); CAILLEY, Géraud, F-18000 Bourges (FR)
(74) Mandataire: Calvo de Nó, Rodrigo
(86) Numéro de dépôt international: PCT/FR2012/051150
(87) Numéro de publication internationale: WO 2012/160310

(56) Documents cités:
- WO-A1-95/22922
- DE-U1-202004 017 617
- DE-U1-202005 010 441
- FR-A1- 2 894 242
- US-A1- 2008 189 868

## Description

La présente invention concerne le domaine de l'ameublement, et notamment des matelas et des coussins.

Elle concerne plus précisément un élément de suspension de coussin ou de matelas comprenant au moins un noyau compressible, en matériau souple, de préférence déformable de manière au moins partiellement élastique, et présentant au moins un axe de compression. Dans une application particulière, une pluralité de tels éléments est intégrée entre les faces inférieure et supérieure d'un matelas, afin d'offrir un support distribué et confortable à un utilisateur du matelas. Toutefois, d'autres applications, comme par exemple dans un coussin d'assise d'un siège, fauteuil ou canapé, peuvent aussi être envisagées pour un tel élément de suspension de coussin ou de matelas.

Afin d'améliorer le confort des utilisateurs, des nouveaux matériaux, et notamment des mousses, telles que les mousses de latex ou les mousses à haute ou basse résilience, ont trouvé emploi dans le domaine du rembourrage de matelas et coussins. Toutefois, ces matériaux présentent certains inconvénients. En particulier, afin d'offrir un support suffisamment ferme, des mousses d'une densité relativement élevée sont utilisées de préférence. Ceci se répercute négativement tant sur le coût que sur le poids du coussin ou matelas. En outre, ces matériaux, et notamment les mousses fermées, n'offrent pas une ventilation importante.

Afin d'augmenter la sensation de fermeté du coussin ou matelas, il est connu de la personne du métier d'y intégrer une pluralité d'éléments plus fermes, ou « plots ». Toutefois, ces éléments sont normalement des éléments élastiques ne présentant pas les caractéristiques d'amortissement des mousses.

La présente invention vise à remédier à ces inconvénients. Notamment, l'invention vise à proposer un élément de suspension de coussin ou matelas tel que revendiqué dans la revendication 1, qui permette d'exploiter les caractéristiques favorables d'un matériau souple dans, par exemple, un coussin, et notamment coussin d'assise, ou un matelas, sans l'alourdir sensiblement, et de manière plus économique.

Ce but est atteint grâce au fait que l'élément de suspension de coussin ou de matelas comporte en outre au moins deux pièces d'appui en matériau plus rigide que le matériau du noyau compressible. Dans le présent contexte, on entend par « plus rigide » un matériau dont le module d'élasticité en compression est plus élevé. Au moins une première de ces pièces d'appui est reliée à un côté du noyau compressible, au moins une deuxième est reliée à un côté opposé du noyau compressible suivant l'axe de compression, et chacune présente une surface extérieure d'appui, sensiblement perpendiculaire à l'axe de compression et sensiblement plus large, dans au moins une direction perpendiculaire à l'axe de compression, que le noyau compressible en position détendue.

Grâce à ces dispositions, il est possible d'utiliser un noyau compressible à section réduite, tout en répartissant sa charge de chaque côté sur les surfaces extérieures d'appui. On réduit de cette manière la quantité de matériau requise, et donc le coût et le poids de l'élément de suspension de coussin ou de matelas. En outre, l'espace libre autour du noyau permet une meilleure ventilation du matelas, ce qui en améliore la durabilité.

De préférence, le matériau souple du noyau est une mousse. En particulier, mais pas exclusivement, il peut être une mousse à haute résilience, c'est-à-dire, avec une résilience d'au moins 50 % selon le test de rebondissement de balle suivant la norme ISO 8307. L'élément peut ainsi offrir une combinaison de fermeté et amortissement contribuant à un plus grand confort de l'utilisateur et une bonne durabilité du noyau. Une mousse présente aussi des avantages de souplesse et légèreté, ainsi qu'une meilleure isolation thermique. Toutefois, alternativement à une telle mousse, ou en combinaison avec elle, d'autres types de matériau, tels que, par exemple, un gel, ou un matériau élastique formant un corps creux, pourraient aussi être utilisés dans le noyau compressible. Parmi les mousses, on pourrait utiliser aussi une mousse de latex ou un des types de mousse synthétique dits viscoélastiques, à mémoire de forme ou à basse résilience.

De préférence, au moins une des pièces d'appui présente au moins un orifice débouchant d'aération, ce qui permet d'encore améliorer la circulation d'air à travers le coussin ou matelas.

Dans au moins un mode de réalisation, le noyau peut présenter une section cruciforme transversalement à l'axe de compression, afin d'éviter un flambage du noyau. La réponse mécanique du noyau aux efforts, y compris à des efforts excentrés, est ainsi améliorée. Toutefois, d'autres sections peuvent aussi être alternativement considérées par la personne du métier selon les circonstances. En particulier, une section ronde peut être adoptée si l'on souhaite par contre faciliter la flexion du noyau compressible perpendiculairement à l'axe de compression.

De préférence, au moins une des pièces d'appui est fixée au noyau compressible par serrage du noyau compressible perpendiculairement à l'axe de compression, ce qui facilite l'assemblage de l'élément de suspension de coussin ou de matelas. Toutefois, d'autres alternatives, comme par exemple le collage, peuvent aussi être envisagées.

Un autre objet de l'invention est celui de combiner la réponse mécanique du matériau du noyau compressible avec celle d'un autre matériau. Pour cela, dans au moins un mode de réalisation, l'élément de suspension de coussin ou de matelas peut comporter aussi au moins un ressort solidaire d'au moins une des pièces d'appui. Il devient ainsi possible de combiner la fermeté et résilience du ressort avec l'amortissement du noyau.

Selon l'invention, ledit ressort est formé de manière intégrale à l'au moins une des pièces d'appui de laquelle il est solidaire. La fabrication de l'élément de suspension de coussin ou de matelas est ainsi facilitée.

Dans au moins un mode de réalisation, ledit ressort est interposé entre la pièce d'appui de laquelle il est solidaire et le noyau compressible. Ainsi, le ressort et le noyau compressible sont connectés en série, de telle manière qu'ils seront normalement soumis à sensiblement les mêmes forces de compression dans l'axe principal du noyau compressible.

Alternativement, toutefois, dans au moins un autre mode de réalisation, ledit ressort est solidaire d'au moins une des pièces d'appui de chaque côté du noyau compressible. Ainsi, le ressort et le noyau compressible sont tous les deux connectés en parallèle et interposés entre les pièces d'appui d'un côté et de l'autre, de telle manière que le ressort et le noyau compressible seront normalement soumis à sensiblement les mêmes déformations en compression dans l'axe principal du noyau compressible. Dans ce cas, ledit ressort peut avantageusement être arrangé de manière à serrer un segment intermédiaire du noyau compressible perpendiculairement à l'axe de compression au moins quand l'élément de suspension de coussin ou de matelas est sous compression, pour ainsi augmenter la résistance de l'élément de suspension de coussin ou de matelas à la compression sur au moins une partie de sa course de compression.

De préférence, ledit ressort comporte au moins une lame élastique flexible, facilitant en particulier son intégration avec au moins une des pièces d'appui. Une telle lame élastique flexible peut par exemple être moulée par injection conjointement avec au moins une des pièces d'appui.

Dans au moins un mode de réalisation, l'élément de suspension de coussin ou de matelas comporte seulement une desdites pièces d'appui de chaque côté du noyau compressible. Alternativement, toutefois, l'élément de suspension de coussin ou de matelas peut comporter plusieurs desdites pièces d'appui de chaque côté du noyau compressible. Dans ce cas, les pièces d'appui de chaque côté du noyau compressible peuvent être connectées latéralement par des liaisons souples, et notamment par des liaisons souples formées de manière intégrale aux pièces d'appui. En outre, une pluralité d'éléments de suspension de coussin ou de matelas peut former un module dans lequel au moins une desdites pièces d'appui d'un desdits éléments est connectée latéralement par des liaisons souples à au moins une pièce d'appui d'un autre desdits éléments.

La présente invention concerne aussi un coussin ou un matelas présentant une face supérieure et une face inférieure sensiblement opposée à ladite face supérieure, et comportant au moins, entre lesdites faces inférieure et extérieure, une pluralité de tels éléments de suspension de coussin ou de matelas.

L'invention sera bien comprise et ses avantages apparaîtront mieux, à la lecture de la description détaillée qui suit, de quatre modes de réalisation représentés à titre d'exemples non limitatifs. La description se réfère aux dessins annexés sur lesquels :
- la figure 1A est une vue en perspective d'un élément de suspension de coussin ou de matelas suivant un premier mode de réalisation de l'invention ;
- la figure 1B est une vue de face d'une pièce d'appui de l'élément de suspension de coussin ou de matelas de la figure la ;
- la figure 2A est une vue en perspective d'un élément de suspension de coussin ou de matelas suivant un deuxième mode de réalisation de l'invention ;
- la figure 2B est une vue en perspective d'une pièce d'appui de l'élément de suspension de coussin ou de matelas de la figure 2A ;
- la figure 3A est une vue en perspective d'un élément de suspension de coussin ou de matelas suivant un troisième mode de réalisation de l'invention ;
- la figure 3B est une vue en perspective d'une pièce d'appui de l'élément de suspension de coussin ou de matelas de la figure 3A ;
- les figures 4A et 4B sont, respectivement, une vue de côté et une vue en perspective d'un élément de suspension de coussin ou de matelas suivant un quatrième mode de réalisation de l'invention ;
- la figure 5 est une vue en perspective d'un élément de suspension de coussin ou de matelas suivant un cinquième mode de réalisation de l'invention ;
- la figure 6A est une vue en perspective d'un élément de suspension de coussin ou de matelas suivant un sixième mode de réalisation de l'invention ;
- les figures 6B à 6H sont des sections alternatives du noyau compressible de l'élément de suspension de coussin ou de matelas de la figure 6A ;
- les figures 7 et 8 sont des vues en perspective d'éléments de suspension de coussin ou de matelas suivant, respectivement, un septième et un huitième mode de réalisation de l'invention ;
- la figure 9 est une vue en perspective d'éléments de suspension de coussin ou de matelas formant un module suivant un neuvième mode de réalisation de l'invention ; et
- la figure 10 est une vue schématique d'un matelas intégrant une pluralité d'éléments de matelas suivant un quelconque des premier à sixième modes de réalisation de l'invention.

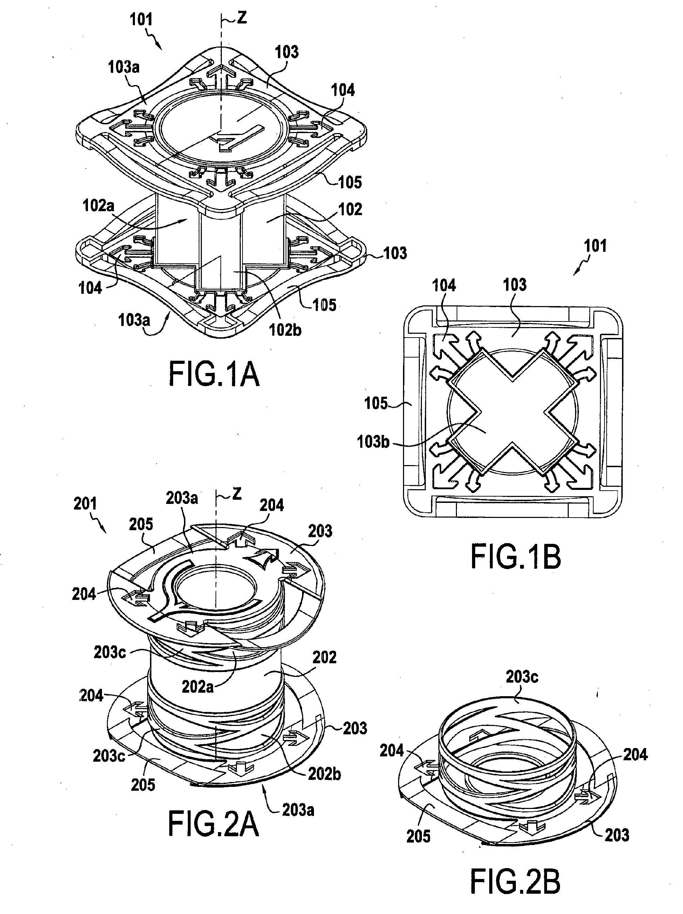

Un élément de suspension de coussin ou de matelas 101 suivant un premier mode de réalisation est illustré sur la figure 1A. Cet élément de suspension de coussin ou de matelas 101 comporte un noyau compressible 102 en matériau souple, avec deux extrémités opposées 102a et 102b et un axe de compression Z, ainsi qu'une pièce d'appui 103, fixée sur chacune des deux extrémités 102a, 102b. Dans ce premier mode de réalisation, le noyau compressible 102 présente une section cruciforme transversalement à l'axe de compression Z, de manière à le stabiliser dans le plan transversal et empêcher son flambage sous compression. Ce noyau compressible 102 peut être formé par extrusion, suivant l'axe de compression Z, d'une mousse synthétique souple, de préférence du type dit à haute résilience, c'est qui est classiquement entendu comme présentant une résilience d'au moins 50 % dans un test de rebondissement de balle suivant la norme ISO 8307. Cette mousse peut en particulier être une mousse de polyuréthane, présentant plus particulièrement une densité entre 30 et 150 kg/m³. Les pièces d'appui 103 sont formées dans un matériau plus rigide, c'est-à-dire, ayant un module d'élasticité plus élevé que le matériau du noyau compressible 102, et chacune des deux pièces d'appui 103 présente une surface extérieure d'appui 103a sensiblement plus large que la section transversale du noyau compressible 102. Ainsi, une charge transmise par le noyau compressible 102 en compression peut être distribuée, par la pièce d'appui 103 de chaque côté de l'élément 101, sur une plus grande surface d'appui. La surface d'appui de l'élément 101 n'est donc pas dictée par la section du noyau compressible 102 transversalement à l'axe de compression Z.

Comme l'on peut voir plus clairement sur la figure 1B, chaque pièce d'appui 103 présente une surface intérieure 103b adaptée à être collée sur l'une ou l'autre des extrémités 102a, 102b du noyau compressible. En outre, chaque pièce d'appui 103 présente aussi, autour de cette surface intérieure 103b, des orifices débouchants 104 servant à une meilleure ventilation du coussin ou matelas. Les pièces d'appui 103 peuvent être produites, par exemple, par moulage-injection. Le matériau utilisé peut notamment être un matériau élastique naturel, tel que le caoutchouc, ou synthétique, en particulier un élastomère thermoplastique, notamment un élastomère thermoplastique de polyester ou TPEE (de l'anglais « Thermoplastic Polyester Elastomer »), qui est un copolymère de polyester à haut module d'élasticité. Ainsi il sera possible de former, de manière intégrale à chaque pièce d'appui 103, des lames de ressort 105 en saillie du côté intérieur de la pièce d'appui 103. Dans ce mode de réalisation, la finalité de ces lames de ressort 105 est celle d'augmenter la résistance de l'élément 101 en fin de course en compression, quand les ames de ressort 105 des pièces d'appui 103 opposées vont entrer en contact.

Bien que dans ce premier mode de réalisation les pièces d'appui 103 soient collées aux extrémités 102a, 102b du noyau compressible 102, d'autres alternatives existent pour leur fixation. Ainsi, dans un deuxième mode de réalisation illustré sur les figures 2A et 2B, les extrémités 202a, 202b du noyau compressible 202 d'un élément de suspension de coussin ou de matelas 201 sont serrées perpendiculairement à l'axe de compression Z par des colliers 203c solidaires de la face intérieure de chacune des pièces d'appui 203. Ainsi, les pièces d'appui 203 peuvent être fixées sur chacune des extrémités 202a, 202b du noyau compressible 202 par simple insertion de l'extrémité 202a, 202b dans le collier 203c de la pièce d'appui 203 correspondante. Comme dans le premier mode de réalisation, le noyau compressible 202 est en matériau souple et peut en particulier être réalisé par extrusion d'une mousse synthétique souple à haute résilience, et en particulier une mousse de polyuréthane, présentant plus particulièrement une densité entre 30 et 150 kg/m³. Toutefois, dans ce deuxième mode de réalisation, la section transversale du noyau compressible 202 est ronde, et non pas cruciforme, ce qui non seulement facilite la fixation des colliers 203c sur ses extrémités, mais aussi la flexion du noyau compressible 202 perpendiculairement à son axe principal Z, formant ainsi une articulation de type rotule entre les pièces d'appui 203.

Chaque pièce d'appui 203 présente aussi, autour des colliers 203c, des orifices débouchants 204 servant à une meilleure ventilation du matelas ou du coussin. Comme dans le premier mode de réalisation, les pièces d'appui 103 peuvent être produites, par exemple, par moulage-injection. Le matériau utilisé peut notamment être un matériau élastique naturel, tel que le caoutchouc, ou synthétique, en particulier un élastomère thermoplastique, notamment un élastomère thermoplastique de polyester. Des lames de ressort 205 sont aussi formées en saillie du côté intérieur de chaque pièce d'appui 203, afin d'augmenter la résistance de l'élément 201 en fin de course en compression, quand les lames de ressort 205 de chaque pièce d'appui 203 entrent en contact avec la pièce d'appui 203 opposée.

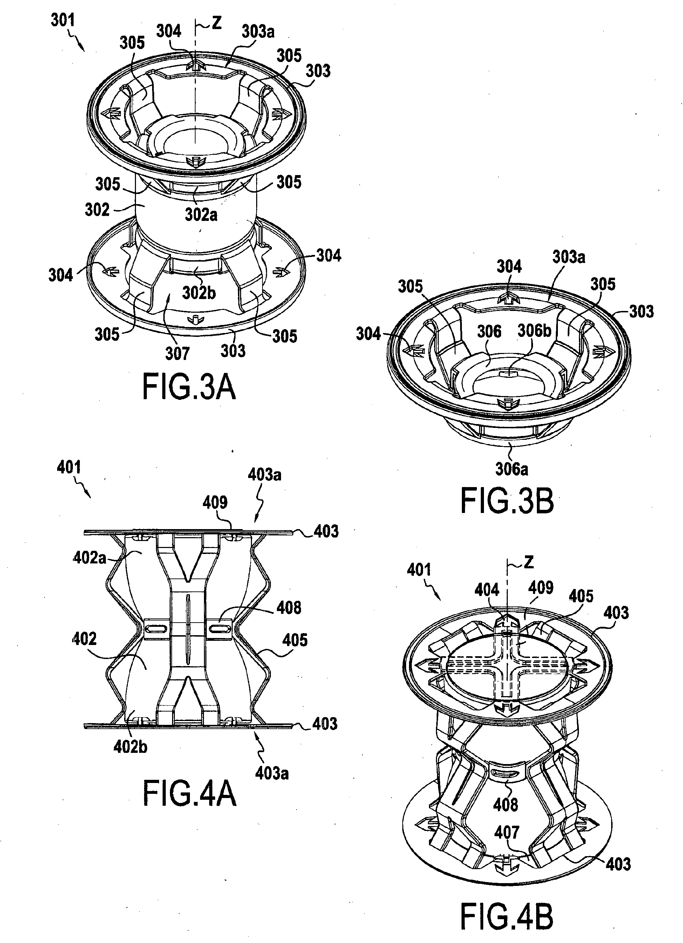

Des lames de ressort peuvent aussi être arrangées de manière à être sollicitées aussi au début de la course de compression, et non pas seulement en fin de course. Dans un troisième mode de réalisation illustré sur les figures 3A et 3B, l'élément de suspension 301 comporte des lames de ressort 305, formées de manière intégrale aux pièces d'appui 303, qui sont interposées entre ces pièces d'appui 303 et le noyau compressible 302. Ainsi, ces lames de ressort 305 forment, de chaque côté du noyau compressible 302, un ressort plus faiblement amorti que ce noyau compressible 302, et relié en série avec celui-ci de manière à être soumis aux mêmes forces de compression.

De chaque côté du noyau compressible 302, la connexion entre les lames de ressort 305 et le noyau compressible 302 est faite à travers un embout 306, formé aussi de manière intégrale aux lames de ressort 305 et aux pièces d'appui 303, et présentant une ceinture 306a avec des ergots 306b pour accrocher la surface extérieure du noyau compressible 302, comme illustré sur la figure 3b. A part des orifices débouchants 304 de même type que ceux des premier et deuxième modes de réalisation, chacune des pièces d'appui 303 présente aussi une grande ouverture centrale 307, complémentaire au contour des lames de ressort 305 et de l'embout 306 dans un plan transversal à l'axe principal Z, permettant ainsi non seulement d'améliorer la ventilation du coussin ou matelas, mais aussi le moulage-injection de la pièce d'appui 303, les lames de ressort 305 et l'embout 306 en une seule pièce dans un moule sans tiroirs. Comme dans les modes de réalisation précédents, cet ensemble peut être réalisé avec un matériau élastique naturel, tel que le caoutchouc, ou synthétique, en particulier un élastomère thermoplastique, notamment un élastomère thermoplastique de polyester.

Comme dans les premier et deuxième modes de réalisation, le noyau compressible 302 est en matériau souple et peut en particulier être réalisé par extrusion d'une mousse synthétique souple à haute résilience, et en particulier une mousse de polyuréthane, présentant plus particulièrement une densité entre 30 et 150 kg/m³. Comme dans le deuxième mode de réalisation, la section transversale du noyau compressible 302 est ronde, et non pas cruciforme, ce qui non seulement facilite l'insertion et fixation de ses extrémités 303a, 303b dans les embouts 306, mais aussi la flexion du noyau compressible 302 perpendiculairement à l'axe de compression Z, formant ainsi une articulation de type rotule entre les pièces d'appui 303.

Alternativement à cet arrangement en série, on peut aussi envisager un arrangement en parallèle du ressort par rapport au noyau compressible. Ainsi, dans un quatrième mode de réalisation illustré sur les figures 4A et 4B, les deux pièces d'appui 403 de l'élément de suspension 401 sont reliées l'une à l'autre par les lames de ressort 405, avec lesquelles elles sont formées de manière intégrale, par exemple par moulage-injection. Le matériau utilisé peut notamment être un matériau élastique naturel, tel que le caoutchouc, ou synthétique, en particulier un élastomère thermoplastique, notamment un élastomère thermoplastique de polyester. Dans ce quatrième mode de réalisation, les lames de ressort 405 sont aussi reliées entre elles par une ceinture 408, serrant transversalement un segment intermédiaire du noyau compressible 402 situé entre les extrémités 402a, 402b. Comme dans le troisième mode de réalisation, chaque pièce d'appui 403 présente, à part des orifices débouchants 404 de même type que ceux des premier à troisième modes de réalisation, une grande ouverture centrale 407, dont la finalité principale dans ce quatrième mode de réalisation est celle de permettre l'insertion du noyau compressible 402 entre les deux pièces d'appui 403. Après cette insertion, des pièces de fermeture 409 (en pointillé sur la figure 4B) peuvent être clipsées sur ces ouvertures centrales 407 afin de retenir le noyau compressible 402 dans l'élément de suspension de coussin ou de matelas 401, entre les pièces d'appui 403.

Comme dans les modes de réalisation précédents, le noyau compressible 402 est en matériau souple et peut en particulier être réalisé par extrusion d'une mousse synthétique souple à haute résilience, et en particulier une mousse de polyuréthane, présentant plus particulièrement une densité entre 30 et 150 kg/m³. Comme ce noyau compressible 402 relie les pièces d'appui 403 en parallèle au ressort formé par les lames de ressort 405, quand une force de compression rapproche ces pièces d'appui 403, le noyau compressible 402 et les lames de ressort 405 sont soumis à sensiblement la même déformation en direction de l'axe de compression Z. En même temps, la ceinture 408, intégrée dans le ressort formé par les lames de ressort 405, empêche l'expansion radiale du noyau compressible 402 à son segment intermédiaire, augmentant ainsi la fermeté de l'élément de suspension de coussin ou de matelas 401, tout en facilitant sa flexion perpendiculairement à l'axe de compression Z.

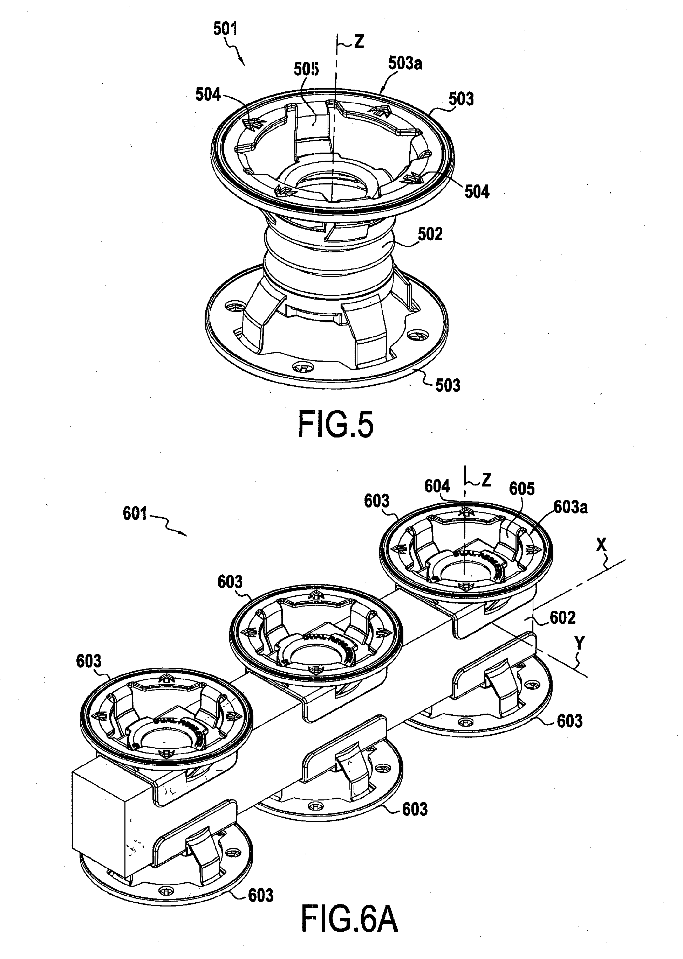

Dans un cinquième mode de réalisation, illustré sur la figure 5, le noyau compressible 502 de l'élément de suspension 501 n'est pas en mousse mais dans un matériau élastique creux et présente une forme de soufflet. Comme dans le troisième mode de réalisation, des lames de ressort 505, formées de manière intégrale aux pièces d'appui 503, sont interposées entre les pièces d'appui 503 et le noyau compressible 502, de manière à former, de chaque côté du noyau compressible 502, un ressort plus faiblement amorti que ce noyau compressible 502, reliés en série avec le noyau compressible 502, de manière à être soumis aux mêmes forces de compression que le noyau compressible 502. Chacune des pièces d'appui 503 présente une surface extérieure d'appui 503a sensiblement plus large que le noyau compressible 502 transversalement à l'axe de compression Z, et des orifices débouchants 504 servant à une meilleure ventilation du coussin ou matelas.

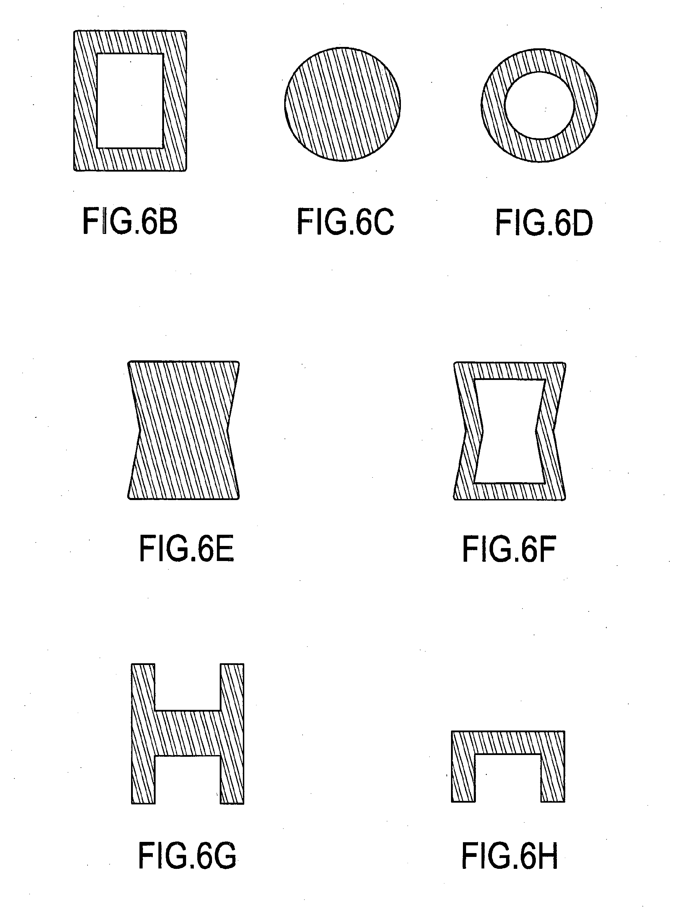

Dans un sixième mode de réalisation, illustré sur la figure 6A, le noyau compressible 602 est allongé dans un axe X perpendiculaire à l'axe de compression Z, et une pluralité de pièces d'appui 603 est arrangée de chaque côté du noyau compressible 602 pour former l'élément de suspension de coussin ou de matelas 601. Comme dans le troisième mode de réalisation, des lames de ressort 605, formées de manière intégrale aux pièces d'appui 603, sont interposées entre ces pièces d'appui 603 et le noyau compressible 602, de manière à former, de chaque côté du noyau compressible 602, des ressorts plus faiblement amortis que ce noyau compressible 602, reliés en parallèle entre eux mais en série avec le noyau compressible 602, de manière à être soumis, ensemble, aux mêmes forces de compression que le noyau compressible 602. Chacune des pièces d'appui 603 présente une surface extérieure d'appui 603a sensiblement plus large que le noyau compressible 602 dans un axe Y perpendiculaire aux axes Z et X, et des orifices débouchants 604 servant à une meilleure ventilation du coussin ou matelas.

Comme dans les premier à quatrième modes de réalisation, le noyau compressible 602 est en matériau souple et peut en particulier être réalisé par extrusion d'une mousse synthétique souple à haute résilience, et en particulier une mousse de polyuréthane, présentant plus particulièrement une densité entre 30 et 150 kg/m³. Toutefois, dans ce mode de réalisation, le matériau n'est pas extrudé suivant l'axe de compression Z, mais l'axe X perpendiculaire. En outre, bien que dans le mode de réalisation illustré sur la figure 6A ce noyau compressible 602 présente une section rectangulaire pleine transversalement à l'axe X, d'autres sections alternatives, pleines ou creuses, peuvent être envisagées, telles que celles illustrées sur les figures 6B à 6H. D'autres matériaux que les mousses peuvent aussi être envisagés, en particulier avec des sections creuses.

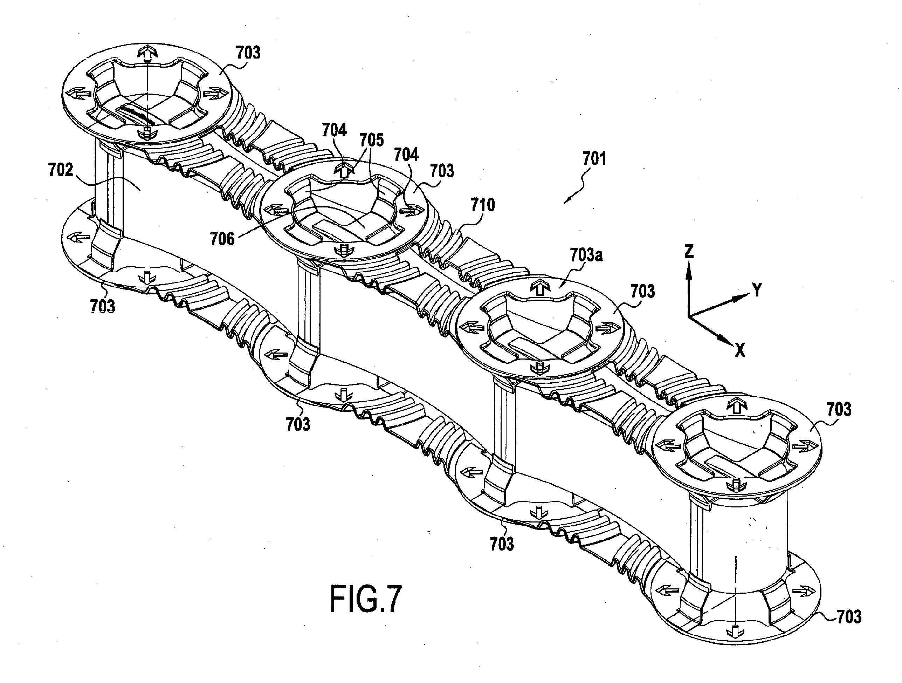

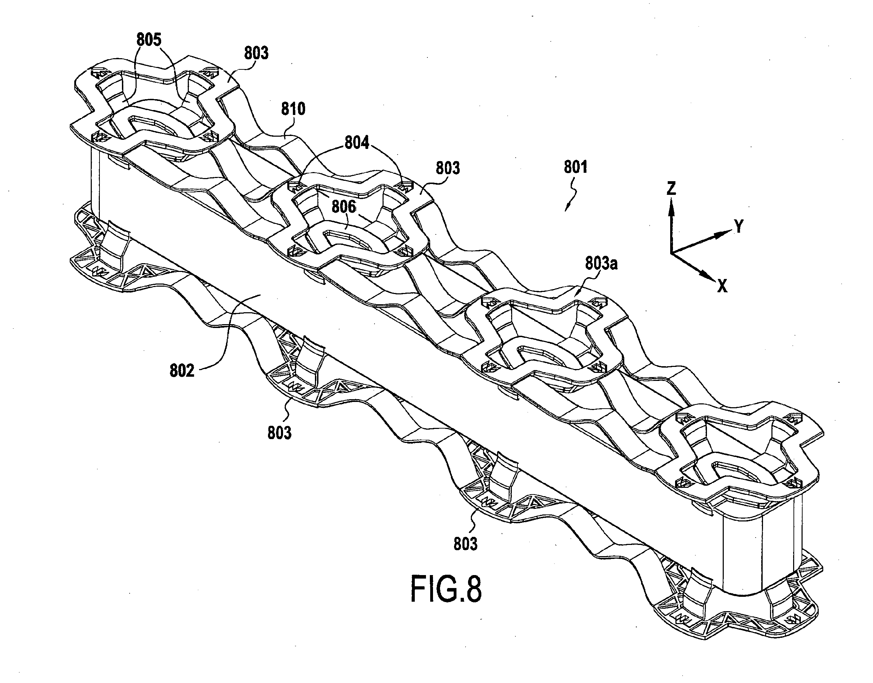

Dans des éléments 701, 801 suivant un septième et un huitième mode de réalisation, illustrés respectivement sur les figures 7 et 8, le noyau compressible 702 ou 802 est aussi allongé dans un axe X perpendiculaire à l'axe de compression Z, et une pluralité de pièces d'appui 703 ou 803 est arrangée de chaque côté du noyau compressible 702, 802 pour former l'élément de suspension de coussin ou de matelas 701, 801. Le noyau compressible 702,802 est aussi en matériau souple et peut en particulier être réalisé par extrusion d'une mousse synthétique souple à haute résilience, et en particulier une mousse de polyuréthane, présentant plus particulièrement une densité entre 30 et 150 kg/m³. Comme dans les troisième et sixième modes de réalisation, des lames de ressort 705,805, formées de manière intégrale aux pièces d'appui 703,803, sont interposées entre ces pièces d'appui 703,803 et le noyau compressible 702,802, de manière à former, de chaque côté du noyau compressible 702,802 des ressorts plus faiblement amortis que ce noyau compressible 702,802 reliés en parallèle entre eux mais en série avec le noyau compressible 702,802, pour être soumis, ensemble, aux mêmes forces de compression que le noyau compressible 702,802. De chaque côté de chaque noyau compressible 702,802, la connexion entre les lames de ressort 705,805 et le noyau compressible 702,802 est faite à travers un embout 706,806, formé aussi de manière intégrale aux lames de ressort 705,805 et aux pièces d'appui 703,803. Chacune des pièces d'appui 703,803 présente aussi une surface extérieure d'appui 703a,803a sensiblement plus large que le noyau compressible 702,802 dans un axe Y perpendiculaire aux axes Z et X, et des orifices débouchants 704,804 servant à une meilleure ventilation du coussin ou matelas. Toutefois, dans chacun de ces deux modes de réalisation, les pièces d'appui 703,803 adjacentes de chaque côté du noyau compressible 702,802 sont reliées par des liaisons souples 710, 810, permettant la flexion de l'élément 701,801 dans le plan XZ. Dans les deux modes de réalisation, ces liaisons souples 710,810 sont formées intégralement aux pièces d'appui 703,803. Toutefois, dans le septième mode de réalisation, les liaisons souples 710 sont en accordéon, tandis que dans le huitième mode de réalisation les liaisons souples 810 ont une forme ondulée. En outre, dans le septième mode de réalisation la largeur en direction de l'axe Y du noyau compressible 702 varie le long de l'axe X, le noyau 702 présentant ainsi des surfaces latérales ondulées.

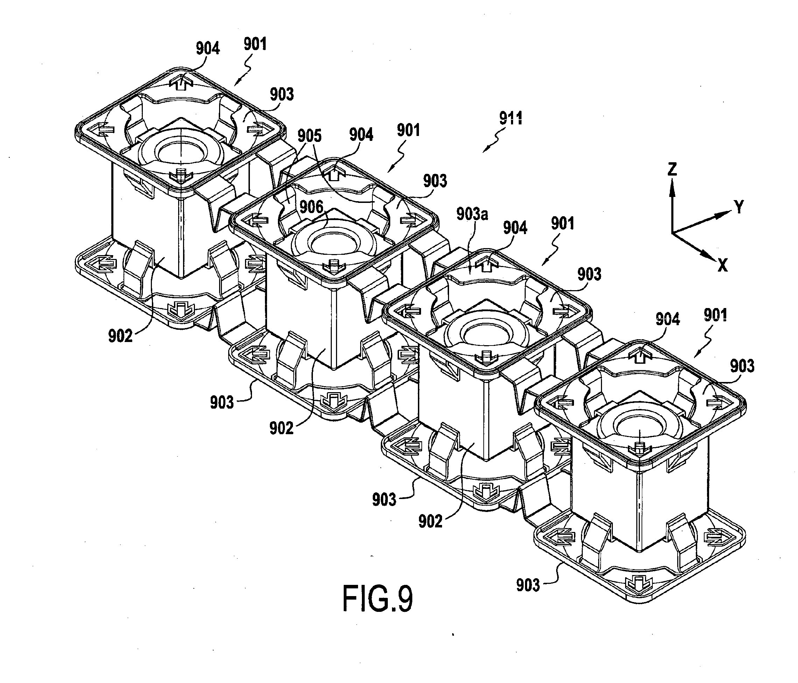

Dans un neuvième mode de réalisation, illustré sur la figure 9, plusieurs éléments de suspension de coussin ou de matelas 901 sont reliés latéralement pour former un module allongé 911. Comme dans le troisième mode de réalisation, chaque élément de suspension 901 comporte des lames de ressort 905, formées de manière intégrale aux pièces d'appui 903, et interposées entre ces pièces d'appui 903 et le noyau compressible 902. Le noyau compressible 902 est en matériau souple et peut en particulier être réalisé par extrusion d'une mousse synthétique souple à haute résilience, et en particulier une mousse de polyuréthane, présentant plus particulièrement une densité entre 30 et 150 kg/m³. De chaque côté de chaque noyau compressible 902, la connexion entre les lames de ressort 905 et le noyau compressible 902 est faite à travers un embout 906, formé aussi de manière intégrale aux lames de ressort 905 et aux pièces d'appui 903. Chacune des pièces d'appui 903 présente aussi une surface extérieure d'appui 903a sensiblement plus large que le noyau compressible 902 dans un axe Y perpendiculaire aux axes Z et X, et des orifices débouchants 904 servant à une meilleure ventilation du coussin ou matelas. En outre, des liaisons souples 910, aussi en forme de lames de ressort et formées de manière intégrale aux pièces d'appui, relient de chaque côté des noyaux compressibles 902 les pièces d'appui 903 adjacentes.

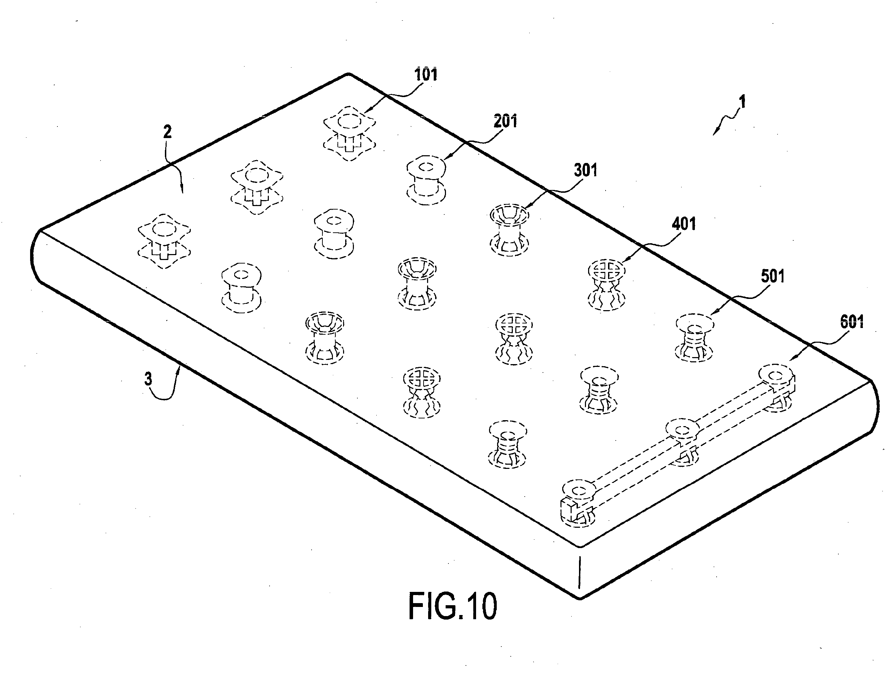

Comme l'on peut voir sur la figure 10, des éléments de suspension de coussin ou de matelas 101, 201, 301, 401, 501 et 601 suivant des différents modes de réalisation peuvent être intégrés dans un matelas 1, entre une face inférieure 2 et une face supérieure 3 du matelas 1, avec leurs axes Z sensiblement perpendiculaires à ces faces inférieure et supérieure 2,3. Ce matelas 1 peut être rembourré d'une mousse de densité sensiblement inférieure à celle des noyaux compressibles 102,202,302,402,502,602. Ainsi, les éléments 101,201,301,401,501, et 601 offrent des appuis ponctuels à l'utilisateur, augmentant la fermeté ressentie et durabilité du matelas 1, tout en limitant son poids et son coût. Comme des ressorts de matelas conventionnels, ces éléments de suspension de coussin ou de matelas peuvent aussi être empochés de manière à protéger le rembourrage. Il est aussi possible d'empiler plusieurs de ces éléments dans l'axe de compression Z. Bien que dans la figure 7 les différents éléments 101,201,301,401,501 et 601 soient illustrés intégrés dans un matelas, d'autres applications peuvent être envisagées, et notamment dans des coussins, principalement des coussins d'assise. On entend par coussin d'assise, dans ce contexte, tout élément présentant une surface souple destinée à fournir une assise confortable. Ainsi, un tel coussin d'assise peut être indépendant ou intégré dans un sofa, canapé, siège, fauteuil, etc.

Quoique la présente invention ait été décrite en se référant à des exemples de réalisation spécifiques, il est évident que différentes modifications et changements peuvent être effectués sur ces exemples sans sortir de la portée générale de l'invention telle que définie par les revendications.

## Revendications

1. Elément de suspension de coussin ou matelas (101,201...901), comprenant au moins :
un noyau compressible (102,202...902), en matériau souple et présentant au moins un axe de compression (Z); et
au moins deux pièces d'appui (103,203...903), dont au moins une première est reliée à un côté du noyau compressible (102,202...902), au moins une deuxième est reliée à un côté opposé du noyau compressible (102,202...902) suivant l'axe de compression (Z), et chacune présente une surface extérieure d'appui (103a,203a...903a), sensiblement perpendiculaire audit axe de compression (Z) et sensiblement plus large, dans au moins une direction perpendiculaire à l'axe de compression (Z), que le noyau compressible (102,202...902) en position détendue et
au moins un ressort solidaire d'au moins une des pièces d'appui (103,203...903) et formé de manière intégrale à l'au moins une des pièces d'appui (103,203...903) de laquelle il est solidaire, **caractérisé en ce que**:
lesdites au moins deux pièces d'appui (103,203...903) sont en matériau plus rigide que le matériau du noyau compressible (102,202...902).

2. Elément suivant la revendication 1, dans lequel le matériau souple du noyau compressible (102,202...402,602...902) est une mousse.

3. Elément suivant la revendication 2, dans lequel ladite mousse est une mousse à haute résilience.

4. Elément suivant l'une quelconque des revendications 1 à 3, dans lequel au moins une des pièces d'appui (103,203...903) présente au moins un orifice débouchant (104,204...904) d'aération.

5. Elément suivant l'une quelconque des revendications 1 à 4, dans lequel le noyau compressible (102) présente une section cruciforme transversalement à l'axe de compression (Z).

6. Elément suivant l'une quelconque des revendications 1 à 5, dans lequel au moins une desdites pièces d'appui (203,303...903) est fixée au noyau compressible (202,302...902) par serrage du noyau compressible (202,302...902) perpendiculairement à l'axe de compression (Z).

7. Elément suivant l'une quelconque des revendications précédentes, dans lequel ledit ressort est interposé entre la pièce d'appui (303,503,603...903) de laquelle il est solidaire et le noyau compressible (302,502,602...902).

8. Elément suivant l'une quelconque des revendications précédentes, dans lequel ledit ressort est solidaire d'au moins une des pièces d'appui (403,703,803,903) de chaque côté du noyau compressible (402,702,802,902).

9. Elément suivant la revendication 8, dans lequel ledit ressort est arrangé de manière à serrer radialement un segment intermédiaire du noyau compressible (402) au moins quand l'élément de suspension de coussin ou de matelas (401) est sous compression.

10. Elément suivant l'une quelconque des revendications précédentes, dans lequel ledit ressort comporte au moins une lame élastique flexible (105,205...905).

11. Elément suivant l'une quelconque des revendications 1 à 10, comportant seulement une desdites pièces d'appui (103,203...503,903) de chaque côté du noyau compressible (102,202...502,901).

12. Elément suivant l'une quelconque des revendications 1 à 10, comportant plusieurs desdites pièces d'appui (603,703,803) de chaque côté du noyau compressible (602,702,802).

13. Elément suivant la revendication 12, dans lequel les pièces d'appui (703,803) de chaque côté du noyau compressible (702,802) sont connectées latéralement par des liaisons souples (710,810).

14. Module (911) comportant une pluralité d'éléments de suspension de coussin ou matelas (901) suivant une quelconque des revendications 1 à 11, dans lequel au moins une desdites pièces d'appui (903) d'un desdits éléments (901) est connectée latéralement par des liaisons souples (910) à au moins une pièce d'appui (903) d'un autre desdits éléments (901).

15. Coussin ou matelas (1) présentant une face supérieure (2) et une face inférieure (3) sensiblement opposée à ladite face supérieure (2), et comportant au moins, entre lesdites faces inférieure et extérieure (2,3), une pluralité d'éléments de suspension de coussin ou de matelas (101,201...901) suivant l'une quelconque des revendications 1 à 14, et dont les axes de compression (Z) sont sensiblement perpendiculaires auxdites faces inférieure et supérieure (2,3) du coussin ou matelas (1).

## Patentansprüche

1. Federungselement für ein Kissen oder eine Matratze (101, 201, ..., 901), umfassend mindestens:
einen komprimierbaren Kern (102, 202, ..., 902), der aus flexiblem Material besteht und mindestens eine Kompressionsachse (Z) aufweist, und
mindestens zwei Abstützteile (103, 203, ..., 903), wovon mindestens ein erstes mit einer Seite des komprimierbaren Kerns (102, 202, ..., 902) verbunden ist, mindestens ein zweites mit der gegenüberliegenden Seite des komprimierbaren Kerns (102, 202, ..., 902) entlang der Kompressionsachse (Z) verbunden ist und jedes eine äußere Abstützfläche (103a, 203a, ..., 903a) aufweist, die im Wesentlichen senkrecht zu der Kompressionsachse (Z) ist und im Wesentlichen mindestens in einer senkrechten Richtung zu der Kompressionsachse (Z) breiter als der komprimierbare Kern (102, 202, ..., 902) in entspannter Position ist, und
mindestens eine Feder, die mit mindestens einem der Abstützteile (103, 203, ..., 903) verbunden ist, die einstückig mit mindestens einem der Abstützteile (103, 203, ..., 903), mit dem sie verbunden ist, ausgebildet ist, **dadurch gekennzeichnet, dass**:
die mindestens zwei Abstützteile (103, 203, ..., 903) aus steiferem Material als das Material des komprimierbaren Kerns (102, 202, ..., 902) bestehen.

2. Element nach Anspruch 1, wobei das weiche Material des komprimierbaren Kerns (102, 202, ..., 402, 602, ..., 902) ein Schaumstoff ist.

3. Element nach Anspruch 2, wobei der Schaumstoff ein Kaltschaumstoff ist.

4. Element nach einem der Ansprüche 1 bis 3, wobei mindestens eines der Abstützteile (103, 203, ..., 903) mindestens eine Durchgangsöffnung (104, 204, ..., 904) zur Belüftung aufweist.

5. Element nach einem der Ansprüche 1 bis 4, wobei der komprimierbare Kern (102) einen kreuzförmigen Abschnitt quer zu der Kompressionsachse (Z) aufweist.

6. Element nach einem der Ansprüche 1 bis 5, wobei mindestens eines der Abstützteile (203, 303, ..., 903) durch Klemmen des komprimierbaren Kerns (202, 302, ..., 902) senkrecht zu der Kompressionsachse (Z) an dem komprimierbaren Kern (202, 302, ..., 902) befestigt ist.

7. Element nach einem der vorhergehenden Ansprüche, wobei die Feder zwischen dem Abstützteil (303, 503, 603, ..., 903), mit dem sie verbunden ist, und dem komprimierbaren Kern (302, 502, 602, ..., 902) angeordnet ist.

8. Element nach einem der vorhergehenden Ansprüche, wobei die Feder mit mindestens einem der Abstützteile (403, 703, 803, 903) auf jeder Seite des komprimierbaren Kerns (402, 702, 802, 902) verbunden ist.

9. Element nach Anspruch 8, wobei die Feder angeordnet ist, um einen Zwischenabschnitt des komprimierbaren Kerns (402) mindestens dann radial festzuklemmen, wenn das Federungselement für ein Kissen oder eine Matratzen (401) komprimiert wird.

10. Element nach einem der vorhergehenden Ansprüche, wobei die Feder mindestens ein flexibles, elastisches Plättchen (105, 205, ..., 905) aufweist.

11. Element nach einem der Ansprüche 1 bis 10, das nur eines der Abstützteile (103, 203, ..., 503, 903) auf jeder Seite des komprimierbaren Kerns (102, 202, ..., 502, 901) aufweist.

12. Element nach einem der Ansprüche 1 bis 10, das mehrere der Abstützteile (603, 703, 803) auf jeder Seite des komprimierbaren Kerns (602, 702, 802) aufweist.

13. Element nach Anspruch 12, wobei die Abstützteile (703, 803) auf jeder Seite des komprimierbaren Kerns (702, 802) seitlich durch elastische Verbindungen (710, 810) verbunden sind.

14. Modul (911), umfassend mehrere Federungselemente für ein Kissen oder eine Matratze (901) nach einem der Ansprüche 1 bis 11, wobei mindestens eines der Abstützteile (903) des einen der Elemente (901) seitlich durch elastische Verbindungen (910) mit mindestens einem Abstützteil (903) eines anderen der Elemente (901) verbunden ist.

15. Kissen oder Matratze (1), die eine obere Seite (2) und eine untere Seite (3) aufweisen, die der Oberseite (2) im Wesentlichen gegenüberliegt, und mindestens zwischen der unteren und der äußeren Seite (2, 3) mehrere Federungselemente für ein Kissen oder eine Matratze (101, 201, ..., 901) nach einem der Ansprüche 1 bis 14 aufweisen und deren Kompressionsachsen (Z) im Wesentlichen senkrecht zu der unteren und oberen Seite (2, 3) des Kissens oder der Matratze (1) sind.

## Claims

1. A cushion or mattress suspension element (101, 201, ..., 901) comprising:
at least one compressible core (102, 202, ..., 902) of flexible material and presenting at least one compression axis (Z); and
at least two bearing parts (103, 203,..., 903), with at least a first bearing part being connected to one end of the compressible core (102, 202, ..., 902) and at least one second bearing part being connected to an end of the compressible core (102, 202, ..., 902) that is opposite along the compression axis (Z), and with each bearing part presenting an outer bearing area (103a, 203a, ..., 903a) that is substantially perpendicular to said compression axis (Z), and in at least one direction perpendicular to the compression axis (Z), that is substantially larger than the compressible core (102, 202, ..., 902) in its relaxed position;
at least one spring secured to at least one of the bearing parts (103, 203,..., 903) and formed integrally with at least one of the bearing parts (103, 203, ..., 903) to which it is secured, **characterized in that** said at least two bearing parts (103,203,...,903) are of material that is more rigid than the material of the compressible core (102,202,...,902).

2. An element according to claim 1, wherein the flexible material of the compressible core (102, 202, ..., 402, 602, ..., 902) is a foam.

3. An element according to claim 2, wherein said foam is a high resilience foam.

4. An element according to any one of claims 1 to 3, wherein at least one of the bearing parts (103, 203,..., 903) presents at least one through orifice (104, 204, ..., 904) for ventilation.

5. An element according to any one of claims 1 to 4, wherein the compressible core (102) has a cross-section relative to the compression axis (Z) that is cruciform.

6. An element according to any one of claims 1 to 5, wherein at least one of said bearing parts (203, 303,..., 903) is fastened to the compressible core (202, 302,..., 902) by clamping against the compressible core (202, 302, ..., 902) perpendicularly to the compression axis (Z).

7. An element according to any preceding claim, wherein said spring is interposed between the bearing part (303, 503, 603, ..., 903) to which it is secured and the compressible core (302, 502, 602, ..., 902).

8. An element according to any preceding claim, wherein said spring is secured to at least one of the bearing parts (403, 703, 803, 903) at each end of the compressible core (402, 702, 802, 902).

9. An element according to claim 8, wherein said spring is arranged so as to clamp radially against an intermediate segment of the compressible core (402) at least when the cushion or mattress suspension element (401) is under compression.

10. An element according to any preceding claim, wherein said spring includes at least one flexible spring blade (105, 205, ..., 905).

11. An element according to any one of claims 1 to 10, having only one of said bearing parts (103, 203, ..., 503, 903) at each end of the compressible core (102, 202, ..., 502, 902).

12. An element according to any one of claims 1 to 10, having a plurality of said bearing parts (603, 703, 803) at each end of the compressible core (602, 702, 802).

13. An element according to claim 12, wherein the bearing parts (703, 803) at each end of the compressible core (702, 802) are laterally connected together by flexible connections (710, 810).

14. A module (911) comprising a plurality of cushion or mattress suspension elements (901) according to any one of claims 1 to 11, wherein at least one of said bearing parts (903) of one of said connection elements (901) is laterally connected by flexible connections (910) to at least one bearing part (903) of another one of said elements (901).

15. A cushion or mattress (1) presenting a top face (2) and a bottom face (3) that is substantially opposite said top face (2), the cushion or mattress including, between said bottom and top faces (2, 3) at least a plurality of cushion or mattress suspension elements (101, 201, ..., 901) according to any one of claims 1 to 14 with their compression axes (Z) being substantially perpendicular to said bottom and top faces (2, 3) of the cushion or mattress (1).
